# EUROPEAN PATENT SPECIFICATION

(11) **EP 4 107 672 B1**
(45) Date of publication and mention of the grant of the patent: **26.11.2025**
(21) Application number: 21756854.2
(22) Date of filing: 22.02.2021
(51) Int. Cl.: G06N 3/08, G06N 3/02, G06N 20/00, G06F 18/214, G06F 18/21, G06N 3/045, G06N 3/10

(54) **AUTOMATED IDENTIFICATION OF TRAINING DATA CANDIDATES FOR PERCEPTION SYSTEMS**
AUTOMATISIERTE IDENTIFIZIERUNG VON TRAININGSDATENKANDIDATEN FÜR WAHRNEHMUNGSSYSTEME
IDENTIFICATION AUTOMATISÉE DE DONNÉES D'APPRENTISSAGE CANDIDATES POUR DES SYSTÈMES DE PERCEPTION

(30) Priority: 21.02.2020 US 202062979776 P
(43) Date of publication of application: 28.12.2022
(73) Proprietor: Edge Case Research, Inc., Pittsburgh PA 15229 (US)
(72) Inventor: KOOPMAN, Philip J., Pittsburgh, PA 15201 (US); DOONAN, Wesley, Pittsburgh, PA 15201 (US); OSYK, Elizabeth Ann, Pittsburgh, PA 15201 (US); MYERS, Eben Isaac, Pittsburgh, PA 15201 (US)
(74) Representative: Cleveland Scott York
(86) International application number: PCT/US2021/019093
(87) International publication number: WO 2021/168435

(56) References cited:
- US-A1- 2017 103 267
- US-A1- 2017 103 267
- US-A1- 2019 303 759
- US-A1- 2019 303 759
- US-A1- 2020 050 716

## Description

### Field of the Invention

This invention relates to novel approaches to identify which data will be useful for training a system that learns by example (e.g., one that uses a form of machine learning). More particularly, the invention relates to methods and systems for identifying high-value training data to be used in retraining a learning-based system such as one implemented using machine learning. Vision-based perception is given as an example embodiment, but other systems will be amenable to this approach as will be apparent to those of skill in the art.

### Background of the Invention

Autonomous systems, such as self-driving cars, use a perception system to transform sensor data (e.g., video camera data) into a model of the world around the system (e.g., a list of objects and positions). This is a more general example of systems that behave based on training data (e.g., implemented with a form of machine learning such as deep learning based on convolutional neural networks).

An important component of performance for such systems is whether the training data covers all important aspects of the behavior to be learned with sufficient breadth and with a sufficient number of examples of each object type to be learned. Each object type typically has multiple sub-types which must also be included in the training data for proper coverage. As a simple example, an object type might be a pedestrian, and sub-types might be whether a pedestrian is wearing a red coat, black coat, or blue coat. "Sub-types" in this context do not necessarily mean classification information that is required by the end application, but rather different presentations of objects that each require sufficient training data to be able to generalize to all relevant objects of that type. In practice, under-sampled training data can result in biases in the output of a machine learning process that might reduce the probability of correct classification of an object to an unacceptably low level because some characteristic is different enough from other instances of that object type to expose a potential defect in learning results.

As an example, consider a perception system that has been trained thoroughly on pedestrians with red coats, black coats, and blue coats. A pedestrian in a yellow rain coat might be detected with lower probability as a pedestrian, or potentially not recognized as a pedestrian at all, if the perception system has learned via its training data that the color yellow is associated with objects other than pedestrian (for example, traffic warning signs and traffic barriers). This situation can be said to result from a systemic bias in training data that under-represents pedestrians in yellow coats.

One approach to identifying such systemic biases is based on comparing object detection and/or classification results between a baseline sensor data stream and a sensor data stream that has been augmented (e.g., with Gaussian noise). Such an approach is described in International Patent Application PCT/US19/59619 Systems and Methods for Evaluating Perception System Quality filed 04-Nov-2019. The approaches described in that patent application are generically called "weakness detections" for a perception system. For example, a comparison of a baseline video data stream with a video data stream having Gaussian noise injected would be an example of a "perception weakness detector." (Note that such detectors can work on other sensor modalities, such as lidar and radar.) An instance of a sensor data sample detecting a weakness is known as a "detection."

One way to employ a perception weakness detector is to present examples of weaknesses to a human analyst. The human analyst can look at numerous detections, discern a pattern, and determine that a corresponding weakness is present in the perception system. Once the weakness has been determined, perception designers can search for more examples of similar data samples and use them to retrain the system, potentially improving performance. If sufficiently numerous additional data samples do not improve the perception system through retraining alone, the perception designers might need to reengineer the system in some way to further improve performance on the identified weakness. The use of manual analysis to determine perception weaknesses can be effective, but can also be time consuming of highly skilled specialists. It is an objective of this invention to reduce the manual analysis effort required to improve perception system performance. In embodiments, improvement of the perception system performance can be demonstrated by a reduction in the number of perception weakness or defects that are identified by the system.

As mentioned, once a perception weakness has been identified, additional training data must be identified. This can involve significant manual effort, such as scanning through archived video for pedestrians wearing yellow coats in line with previously given examples. It is a further objective of this invention to reduce the time and effort required to identify such training data.

After a weakness in a perception system has been identified, training data must be labeled before it can be fed into the machine learning retraining process. Labeling can be extremely expensive due to a significant amount of human labor involvement. For example, it has been reported that a single hour of driving data can take up to eight hundred (800) hours of manpower to label. Another objective of this invention is to make labelling costs more effective by increasing the proportion of data being labelled that will actually help improve perception performance via use as retraining data. As used herein, "training data" refers to both training and validation data as used, for example, in a supervised learning machine learning based approach. The "training data" identified by the disclosed embodiments can be partitioned into all training data, all validation data, or a combination of both as deemed advantageous by perception system designers and the perception validation activity.

These and other features and advantages will be apparent from a reading of the following detailed description and a review of the appended drawings. It is to be understood that the foregoing summary, the following detailed description and the appended drawings are explanatory only and are not restrictive of various aspects as claimed.

US 2017/103267 A1 describes a distributed learning platform and associated method configured for operating on large scale data, to address problems that video imaging systems and platforms face when analyzing image and video content for detection and feature extraction.

US 2019/303759 A1 describes systems and methods for training, testing, and/or verifying one or more features of a real-world system.

### Summary of the Invention

In a first aspect, a computer-implemented method for improving the labeling performance of a machine-learned (ML) perception system on an input dataset is provided in accordance with claim 1.

. These computer-enabled methods can be enabled and performed via a computer system having at least a memory or other data storage facility, one or more processors, and a non-transitory computer-readable medium to store the instructions so that when enabled by the one or more processors, they perform the aforementioned aspect. In second and third aspects there is provided a computer system and a non-transitory computer-readable medium for improving the labeling performance of a machine-learned (ML) perception system on an input dataset in an autonomous vehicle in accordance with claims 10 and 11 respectively.

### Brief Description of the Drawings

For a fuller understanding of the nature and advantages of the present invention, reference should be made to the following detailed description, taken in connection with the accompanying drawings, in which:
Fig. 1 illustrates the inputs for identification of defects in data for a system being tested.
Fig. 2 is a block diagram demonstrating the workflow of a method of improving the labeling performance of a machine-learned system.
Fig. 3 is a block diagram demonstrating the workflow of a method of evaluating the quality of simulated data used to train a machine-learned system.

### Detailed Description of the Invention

The detailed description provided below in connection with the appended drawings is intended as a description of examples and is not intended to represent the only forms in which the present examples can be constructed or utilized. The description sets forth functions of the examples and sequences of steps for constructing and operating the examples. However, the same or equivalent functions and sequences can be accomplished by different examples.

References to "one embodiment," "an embodiment," "an example embodiment," "certain embodiments," "one implementation," "an implementation," "one example," "an example" and the like, indicate that the described embodiment, implementation or example can include a particular feature, structure or characteristic, but every embodiment, implementation or example can not necessarily include the particular feature, structure or characteristic. Moreover, such phrases are not necessarily referring to the same embodiment, implementation or example. Further, when a particular feature, structure or characteristic is described in connection with an embodiment, implementation or example, it is to be appreciated that such feature, structure or characteristic can be implemented in connection with other embodiments, implementations or examples whether or not explicitly described.

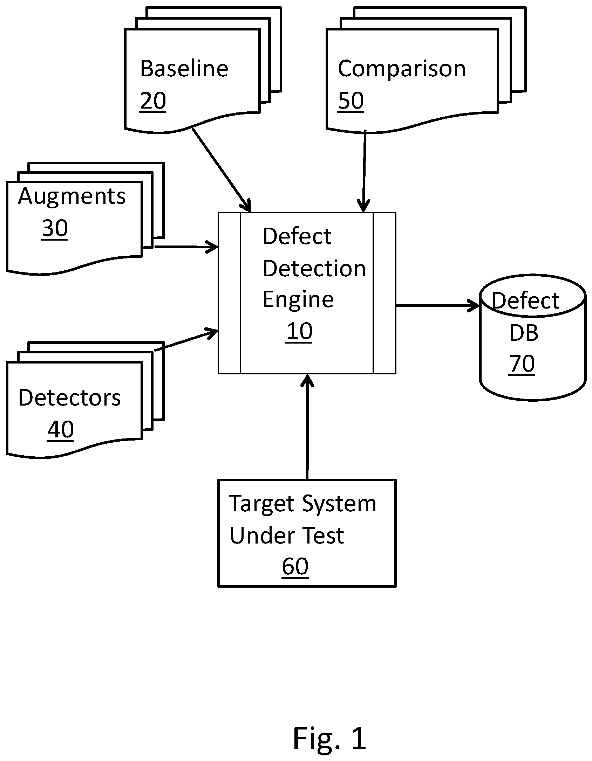

Figure 1 shows some of the data sets that are used by defect detection engine 10, which is used to identify the presence of a perception weakness (hereinafter also called a "defect") within a given set of input data, the baseline dataset 20. The defect detection engine 10 corresponds to a suitable embodiment described in International Application PCT/US2019/59619, entitled "Systems and Methods for Evaluating Perception System Quality" , to identify weak perception performance.

In certain embodiments, the defect detection engine 10 is parameterized by the following attributes: baseline dataset **20,** augmentations **30,** detectors **40,** and, optionally, comparison dataset **50.** The baseline dataset **20** is the set of data on which the defect detection engine **10** operates in order to identify defects. In some embodiments, the engine **10** may need to alter the baseline dataset **20** in some form in order to facilitate defect detection; augmentations **30** are specifications indicating how the data is to be altered in order to accomplish this end. In alternative embodiments, the engine may be provided with a comparison dataset **50** to be used in concert with the baseline dataset **20** in order to perform the defect detection process.

The engine **10** uses one or more computational components in order to perform the desired detection process(es). Detectors **40** are specifications indicating which components to use in order to accomplish this end. The engine **10** executes defect detection process(es) against the baseline dataset **20** and, in some embodiments, a comparison dataset **50,** of a specific "System Under Test" (SUT) **60** in order to evaluate its performance against the test criteria for which given detectors **40** were created. In certain embodiments, the SUT **60** is a perception system, such as a deep convolutional neural network. Perception weaknesses, or "defects," are deposited in a defect database **70** for further processing or label review in accordance with certain embodiments of the present invention.

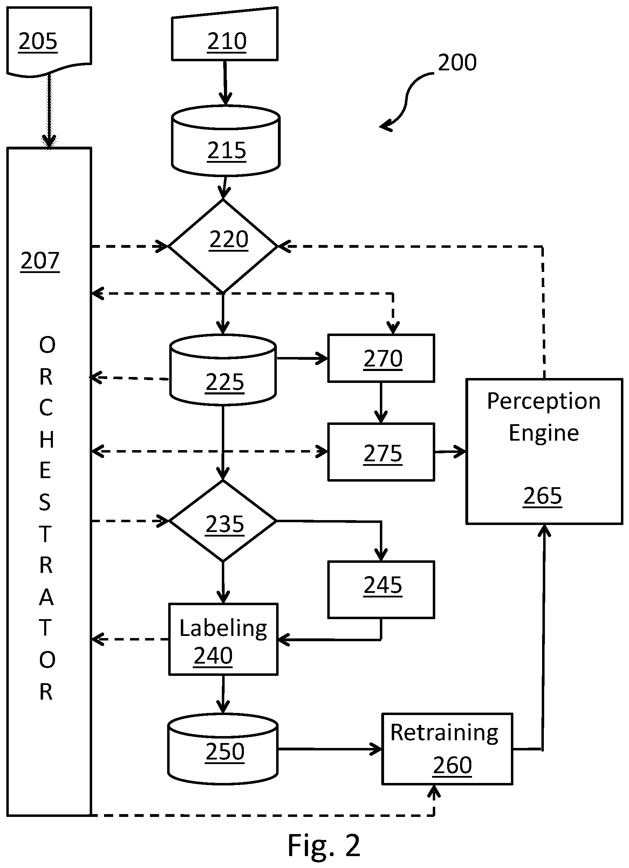

An embodiment of the inventive workflow system **200** is set forth in Figure 2. The embodiment assumes that work executed by the workflow system **200** is represented by a sequence of job specifications **205.** As used herein, job specifications **205** are descriptions of the data inputs, configuration metadata, processing steps and output of each unit of work processed by the system **200.** These job specifications **205** are processed by an orchestrator **210,** which organizes and executes components of the workflow as necessary to satisfy each submitted job specification **205.** Components of the workflow system **200** can assume that all parameters necessary to execute their stage of the overall workflow are provided to them by the orchestrator **210.**

Labeled data is required to train machine-learned models. Labeled data can only be produced at sufficient quality and diversity by human beings involved in some manner doing labeling, and/or quality checks of any automated labeling support. Hiring, training and managing teams of human labelers is expensive and time consuming. In order to maximize the ROI associated with teams of human labelers, the quality, unit cost and value of labels produced by these teams must be optimized. Label quality is optimized by having well-trained labelers and implementing solid quality control processes on the labels they produce. Label unit cost is optimized by maximizing the quantity of labels that can be produced per labeler while maintaining quality, and minimizing the effort required to determine which items are best to label amongst all items that could be labeled. Label value is optimized by ensuring the labels the labelers are being tasked to produce have the highest possible improvement of the models trained using those labels.

The utilization and efficiency of labeling resources that are used to both train and evaluate a given perception system are increased by automatically identifying high-training value defects to be used in training. Certain embodiments exploit the property that scenes with objects identified as perception defects represent examples for which the machine-learned models being evaluated have not been well trained to process, and thus are likely to have a positive impact on model behavior if added to training/evaluation datasets. In effect, labels produced from scenes identified by a defect detection engine, such as **10,** as uncovering sensitivities within the perception system, have higher expected value to the development process than labels produced from scenes selected through other means such as random sampling or subjective human decision-making. Further, the defect detection engine is an automated tool that does not require human interaction in order to identify scenes that uncover sensitivities within the perception system, thus lowering the time and effort needed to determine what items to label and consequently driving down the unit cost of producing labels. In other words, automated identification of defects is more scalable than human-assisted identification of defects. Note that in certain embodiments, human analysts are not used to hypothesize what the root cause of a perception defect might be; rather, labeling activities are automatically invoked in response to automated defect identification.

Certain embodiments provide a method for automatically identifying data items which, when labeled by human labeling teams, are expected to have a positive effect on subsequent model training operations which consume those labels. As illustrated in **Fig. 2****,** autonomous vehicles (e.g. test vehicles) under the control of their autonomy stacks are tasked with driving out in the world (track or road). Road data **210** that includes both sensor and behavioral data concerning what the vehicle encountered and how it behaved are captured during those drives. Eventually, the road data **210** is uploaded to a storage device **215** and stored for later access by a workflow system **200.** In certain embodiments that will be discussed later, this same workflow can equally be applied to data captured from simulated drives involving purely software simulations and/or hybrid Hardware in the Loop simulations.

The following steps outline the stages of an exemplary embodiment illustrated by Fig. 2. Job specification **205** is submitted to orchestrator **207,** requesting a labeling run on some portion of available drive data. Orchestrator **207,** which, in some embodiments, may be an algorithm expressed by software that controls the sequence of steps that need to be performed in order to accomplish a particular task, instructs defect detection engine **220** to execute a labeling run using a set of parameters sourced from the job specification **205.** By way of instructive example, the specified input data can be selected from historical data found in sensor data storage **215.**

The defect detection engine **220** is then instructed to perform one or more specified augmentations on the specified input data and then performs the specified detections using baseline and augmented data as inputs. Next, as a result of the evaluation, candidate defects are identified and stored in a defect database **225.** Optionally, operational data (e.g., progress of data analysis) are provided to an operations dashboard and the orchestrator **207** is notified that the analysis is complete.

Next, orchestrator **207** instructs defect detection filter **235** that a new collection of candidate defects is available for filtering and transmission to a labeling facility **240.** The filter **235** then extracts those defects from the current job that match the desired filtering criteria, produces a set of instructions to the labeling facility **240** indicating the scenes to be labeled, and transmits those instructions to the labeling facility **240.** As used herein, the term "scene" refers to one complete sample in the environment that a particular sensor is designed for. By way of nonlimiting example, a scene may be a single video frame or the data associated with a single Lidar sweep.

In certain embodiments, the filter configurator **245** optionally provides a way to filter some defects in order to concentrate on specific defects of engineering interest (example: perception weaknesses associated with pedestrians more than 250 pixels tall). An associated viewer displays examples of defects that satisfy the filter criteria for optional tuning by a user of the system. However, there is no requirement for the user to view any filtering results, nor is there a requirement for a filter to do any subsetting of the defect database. Thus, this part of the workflow can be performed with minimal or no human supervision.

The labeling facility **240** labels the scenes and artifacts requested, adds the results to the available set of labeled data at the training and validation database **250,** and notifies orchestrator **207** that labeling has completed. Orchestrator **207** then directs the system to recommence perception system retraining **260.** Once the machine learning models associated with the newly labeled data are retrained, and a newly trained perception engine **265** is produced responsive to training data identified by the preceding steps. Since this data provides labeled examples of data samples that the perception engine **265** was measured to perform weakly upon, there is an expectation that training on such samples will improve perception performance.

In certain embodiments, the steps will be executed on a repeated basis, as a way of continuously identifying new perception weaknesses and automatically incorporating re-labeled scenes into data sets used to train associated ML models. In embodiments, a performance dashboard displays current and historical perception engine performance data, such as reduction in defects over successive runs of the described workflow.

In certain embodiments of the present invention, an evaluator **270** and a re-engineer process **275** handle situations in which brute force retraining reveals systemic issues that are not amenable to such retraining. ML models evolve along two primary axes: learning and reengineering and are able to gain capabilities and performance over time through continual expansion and curation of the datasets on which they are trained; as the set of training data gets larger and increases in quality, well constructed models will grow in capability and performance. However, ML models are also subject to local maxima, meaning that at various points in their development further training will not enable new capabilities or enhance performance. When such plateaus are reached, models must be re-engineered. Examples of re-engineering include architectural changes to the model and hyperparameter changes as are known to those skilled in the art (e.g., increasing number of layers in a deep network, topology, and training approach).

Certain embodiments of the present invention leverage signals inherent in results captured from a sequence of defect detection engine runs against an ML model trained on a growing collection of training data (such as that produced via Fig. 2). Evaluating the results of a succession of labeling runs is expected to reveal either progress towards an intended goal (indicating there is utility in continuing to re-train with additional data) or lack thereof (indicating a local maxima has been reached such that adding more labeled data will not make adequate progress, and the model needs to be re-engineered).

As mentioned, certain embodiments include monitoring the progress of an ML model across a sequence of training runs, to identify when additional training is no longer effective and model re-engineering is required. In particular, the orchestrator **207** instructs evaluator **270** to compare a newly created set of defects with the sets of defects generated from prior labeling runs against the same source dataset. If it is determined that meaningful progress was made by adding new labels, evaluator **270** instructs orchestrator **207** to continue the labeling. If it is determined that no meaningful progress was made by adding new labels, evaluator **270** instructs orchestrator **207** to initiate re-engineering with regard to the identified set of defects that have proven resistant to model retraining. Meaningful progress in this context is measured in terms of improvement in the Precision-Recall (PR) curve for the ML perception system. As used for this curve, "precision" what is the false positive percentage and recall is the false negative percentage. In embodiments, if the curve has improved in an amount greater than 0.5% percent, it is still considered meaningful progress such that re-engineering is not necessary. One nonlimiting example of "meaningful improvement" is a run over run comparision of the perception system results wherein, after re-labeling, there was a 0.5% improvement in precision with no degradation in recall. Nevertheless, those of skill in the art will recognize that meaningful improvement can be characterized in different ways.

In embodiments, perception system re-engineering **275** may involve adjusting model hyperparameters, adding/changing layers, applying regularization techniques and other techniques. When complete, perception system re-engineering **275** submits new job specifications to Orchestrator **207** to restart labeling and other workflows using the newly adjusted perception engine **265.**

In still further embodiments, the systems and methods set forth in Fig. 2 may also be used to search for classification errors, according to the following: a job specification **205** is submitted to orchestrator **207,** requesting an evaluation run on some portion of stored real-world previously collected data. Orchestrator **207** instructs the defect detection engine **220** to execute a defect detection run. As before, parameters used in this example are for purposes of illustration only and would be sourced from the job specification **205.** First, data with available ground truth is selected from the historical data sensor storage **215** and certain augmentations are performed on a copy of the data to enhance weakness detection as taught in PCT/US2019/59619. Specified detections are then identified using augmented and ground truth data and candidate defects are stored in the defect database **225.** Next, the newly created set of defects are compared against the sets of defects generated from prior evaluation runs against ground truth. If no meaningful progress has been made with the model since the last evaluation against ground truth, orchestrator **207** initiates the core re-engineering workflow outlined above. As previously described, filter **235** and evaluator **270** can optionally be executed in reverse order. It is expected that this embodiment will be executed on a repeated basis, as a way of constantly evaluating the current state of the model and whether further training or re-engineering is required.

In still further embodiments, the quality of simulations used to train ML models can be improved, which will increase the trust placed in the simulation tooling as a result. Autonomous systems are tested via simulations as a way of expanding scenario coverage and exploring the existing testing space. When evaluating ML models against simulated data however, there is always a question of whether the behavior of a given ML model is due to the ML model itself or the quality of the simulation it was trained upon. Providing quantitative mechanisms for evaluating the quality of simulated objects enables both producers and users of simulation tooling to build trust in the results of running ML models against simulated worlds.

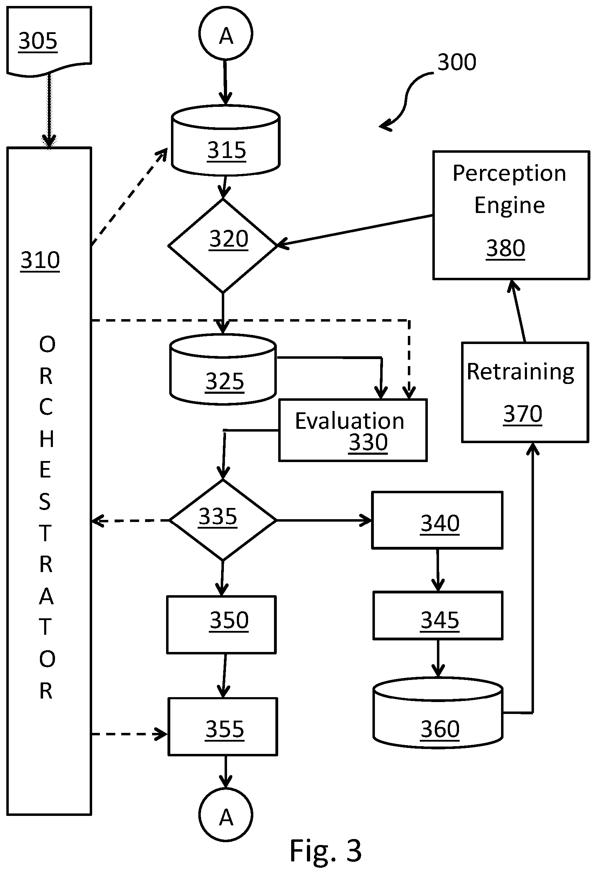

The embodiment illustrated in Fig. 3 leverages a latent signal embodied in the results captured from a sequence of defect detection runs against a given ML model trained on simulated data. When the defect detection engine identifies a particular feature or object in a simulated scene as producing a weakness within a given ML model, the scene (one or more data samples) can be automatically run through an evaluation process against existing ground truth information to assess whether the simulated scene data itself is a source of problems. Put another way, this embodiment outlines a method for capturing sensitivities of particular ML models to simulated features, and automatically invoking evaluations on those features to determine the quality of those features against a given set of quantitative measures.

Simulated vehicles under the control of their autonomy stacks are being tasked with driving through simulated worlds; sensor and behavioral data concerning what the vehicle encountered and how it behaved are being captured during those drives, and eventually moved into a repository accessible to components in the workflow system.

Figure 3 illustrates certain embodiments of the present invention tailored to evaluate the quality of simulated objects. In this workflow **300,** job specification **305** is submitted to orchestrator **310,** requesting a labeling run on some portion of stored simulated drive data **315.** This differs from the earlier embodiment where actual road data was used. Orchestrator **310** instructs the defect detection engine **320** to execute an evaluation run, per the following procedure. As before, parameters used in this example are for purposes of illustration only and would be sourced from the job specification **305.**

Data with available ground truth is selected from sensor data storage 315. . Specified detections are performed using baseline and ground truth data by defect detection engine **320** and candidate defects are stored in the defect database **325.** In certain embodiments, scenes related to the candidate defects are stored in the database **325** as well.

Next, orchestrator **310** initiates the evaluate simulated objects engine **330** to determine the rendering quality of objects in a scene identified as candidate defects. In certain embodiments, the workflow **300** will extract the rendering within each bounding box identifying a candidate defect, determine the type(s) of the simulated objects it contains, and execute an automated comparison function of those simulated objects against other examples of those objects stored in an existing catalog of labeled actual sensor footage imagery. In other embodiments, a learned model could be trained on a library of existing objects that have been labeled. Then, if there is a poor match, a new simulation can be created to see if the new object has higher confidence against what the model says it is. If so, it's better. Note that since a simulator has generated the sensor data, ground truth is known without need for human-assisted labeling.

If subsequent Quality Assessment **335** determines a rendered entity is of unacceptable quality, the corresponding candidate defect is flagged in the defect database **325** as requiring an update to the simulation world model. The Orchestrator **310** is notified that the Quality Assessment **335** is complete. If, however, any candidate defects remain that do not require an update to the simulation world model, the Orchestrator **310** initiates the remainder of a standard labeling workflow, proceeding next to the Filter **340** step, labeling **345,** and deposit of labeled data in training database **360** with subsequent re-training **370** of the perception engine **380** as previously explained. If candidate defects have been flagged as requiring updates to the simulation world model, the orchestrator **310** provides the set of candidate defects and associated metadata to developers/maintainers of the simulation information base pursuant to the update world models step **350.** Developers and maintainers of the simulation information base examine the candidate defect information and metadata, identify necessary improvements and update the affected world models. Once adjustments to the affected world models are complete, new simulator **355** runs are initiated to generate new simulation entries in sensor data storage **315** for use in future evaluation runs. It is expected that this embodiment will be executed on a repeated basis, as a way of constantly evaluating the quality of simulated features provided by the simulation tooling.

In still other embodiments, an automated process is provided for determining the triggering condition for defects discovered during model testing with simulated data. When developing an autonomous system it often becomes necessary to determine the root case, or "triggering condition," for a witnessed behavior of the system. This process is generally a manual process, requiring highly trained and experienced human evaluators to examine individual scenes in a dataset, assert potential causes for the exhibited behavior, and run experiments to confirm or refute those assertions. The cost of executing this manual process is quite high, thus identifying ways to substantially or fully automate this process brings considerable value.

Certain embodiments of the disclosed system and method leverage the latent signal embodied in the results captured from a sequence of defect detection runs against a given ML model trained on simulated data. When the defect detection engine identifies a particular feature in a simulated scene as producing a sensitivity within a given ML model, it can be considered to have automatically identified an interesting condition for further evaluation. Further, having identified the defect from a scene originated in a simulated world, it has also identified a particular scenario and world model embodying the sensitivity. The scenario configuration and world models are parameterized, and thus can be used to generate a set of new simulations using the original scenario and/or world model with one or more altered parameters. Running the defect detection engine on the output from simulations created using these altered scenarios and/or world models will produce new sets of defects, which can be compared with the defects generated from the simulation run that triggered the original defect. If altering a particular parameter of the scenario or world model is shown to have a material effect on the set of defects generated by the defect detection engine over a sequence of runs, for some class of parameters the triggering condition for the defect can be inferred from the nature of the altered parameter.

This embodiment outlines a method for identifying candidate defects for root cause analysis of triggering conditions, and a mechanism for leveraging the defect detection engine to evaluate simulated driving data to automatically infer triggering conditions for those defects.

In certain embodiments, simulated vehicles under the control of their autonomy stacks are being tasked with driving through simulated worlds; sensor and behavioral data concerning what the vehicle encountered and how it behaved are being captured during those drives, and eventually moved into a repository accessible to components in the workflow system.

Still referring to Fig. 3, a modified version of the trigger identification process 300 will now be described. A job specification **305** is submitted to the orchestrator **310,** which instructs the defect detection engine **320** to execute an exploration run. As before, parameters used in this example are for purposes of illustration only and would be sourced from the job specification **305.** Data with available ground truth (for example, data in a training and validation database **360** that has already been labeled, or previously simulated data results) is selected. Then, specified detections are performed using baseline and ground truth data by defect detection engine **320.** Candidate defects are then stored in the defect database **325,** along with a reference to the scenario used to generate the originating simulation (for simulated data) or an annotated scenario description of labeled road data. Next, the orchestrator **310** directs that related simulations with one or more altered parameters be generated, enabling exploration of the simulation space adjacent to the features identified in the set of candidate defects.

In certain embodiments, the simulated objects within each bounding box for each candidate defect can be identified using associated ground truth and it can be determined, from past runs of the workflow, whether parameter alterations in the current simulation scenario or world model had a material effect on the set of detections generated in the current run. If the material effect is trending positively (i.e., indicates a correlation) but is not yet sufficient to infer causation, the next step is to generate one or more new simulation scenarios or world models that further alter the same parameters associated with entities identified by the current set of detections. If, however, the material effect is trending negatively or there was no material effect, one or more new simulation scenarios or world models are generated that alter different parameters associated with the entities identified by the current set of detections.

In the case of new simulation scenarios or world models, new job specifications 305 are submitted for additional workflow runs against the new simulation instances. If sufficient causality between parameter alteration of one or more scenes or world model can be determined, the set of parameter alteration(s) are recorded with the set of candidate defects in the defect database **325,** and the overall workflow terminates. If insufficient causality between parameter alteration of one or more scenes or world model can be determined, the set of defects is marked for human review and the overall workflow terminates.

Examples of parameters that can be altered include object properties (e.g., color, shape, size, presentation angle or actors, vehicles, road furniture, and the like), backgrounds (e.g., color, texture, brightness), scene characteristics (e.g., contrast, glare), environmental characteristics (e.g., haze, fog, snow, sleet, rain), and occlusion (slight occlusion, partial occlusion, heavy occlusion).

It is expected that this embodiment will be executed on a repeated basis, as a way of constantly searching for defects and identifying their triggering conditions. It will be apparent to one of skill in the art that labelling could be completely automated provided a sufficiently accurate automated perception labeling capability is available, or could be semi-automated.

The various embodiments of the invention can be advantageously used to identify good candidates for perception retraining, identify systematic perception system weaknesses, and identify systemic defects in simulator outputs. The invention can be implemented via physical devices (e.g., an augmentation physical computing module comprising hardware and software that modifies data streams sent to a separate perception system as well as a physical computing module that performs comparison) as well as via purely software mechanisms hosted on a convenient computing platform.

Certain aspects of the embodiments set forth herein include process steps. It should be noted that the process steps of the embodiments could be embodied in software, firmware or hardware, and when embodied in software, could be downloaded to reside on and be operated from different platforms used by a variety of operating systems. The embodiments can also be in a computer program product that can be executed on a computing system.

The embodiments also relate to a system for performing the operations herein. This system may be specially constructed for the purpose, e.g., a specifically constructed or selected array of computing devices, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. The memory/storage can be transitory or non-transitory. Memory can include any of the above and/or other devices that can store information/data/programs. Furthermore, the computing devices referred to in the specification may include a single processor or may be architectures employing multiple processor designs for increased computing capability.

## Claims

1. A computer-implemented method for improving the labeling performance of a machine-learned (ML) perception system (60) for detecting objects from sensor data on an input dataset (20) in an autonomous vehicle, the method comprising
processing, by a computing device, the input dataset through the perception system (60);
identifying, by the computing device, one or more perception weaknesses;
isolating, by the computing device, at least one scene from the input dataset that includes the one or more perception weaknesses;
relabeling the one or more perception weaknesses in the at least one scene to obtain at least one relabeled scene; and
retraining, by the computing device, the perception system (60) with the at least one relabeled scene; whereby the labeling performance of the ML perception system is improved, and
wherein the step of processing the input dataset further comprises creating, by the computing device, a dataset augmented with Gaussian noise, processing, by the computing device, the augmented dataset through the perception system, and comparing, by the computing device, results of the input data set with results of the augmented dataset.

2. The computer-implemented method of claim 1, wherein the step of identifying one or more perception weaknesses is performed by a defect detection engine (10).

3. The computer-implemented method of claim 1, wherein the one or more perception weaknesses comprise labeled objects in bounding boxes.

4. The computer-implemented method of claim 1, wherein the step of relabeling the at least one scene comprises sending the at least one scene to be labeled by a human.

5. The computer-implemented method of claim 1, wherein the input dataset is comprised of one or more of baseline data (20), augmented data, ground truth data, and simulated data.

6. The computer-implemented method of claim 1, further comprising filtering, by the computing device (245), the results of the processing step to concentrate on specific perception weaknesses of engineering interest.

7. The computer-implemented method of claim 1, further comprising repeating the method and comparing the perception weaknesses with the perception weaknesses identified in the processing step that occurred prior to the relabeling to determine an amount of improvement in the performance of the perception system (60).

8. The computer-implemented method of claim 7, further comprising repeating the steps of processing, identifying, isolating, relabeling and retraining until retraining the ML perception system (60) with the newly labeled scenes does not meaningfully improve the labeling performance.

9. The computer-implemented method of claim 8, further comprising reengineering the ML perception system (60) when the labeling performance does not meaningfully improve with the newly labeled scenes.

10. A computer system for improving the labeling performance of a machine-learned (ML) perception system (60) for detecting objects from sensor data on an input dataset in an autonomous vehicle, wherein the computer system is adapted to carry out the method of any preceding claim and comprises:
a memory or other data storage facility;
one or more processors; and
a non-transitory computer-readable medium that stores instructions.

11. A non-transitory computer-readable medium comprising instructions which, when executed by a computer, cause the computer to carry out the method of any of claims 1 to 9.

## Patentansprüche

1. Computerimplementiertes Verfahren zum Verbessern der Kennzeichnungsleistung eines ML-(Machine-Learned)-Wahrnehmungssystems (60) zum Erkennen von Objekten aus Sensordaten in einem Eingabedatensatz (20) in einem autonomen Fahrzeug, wobei das Verfahren Folgendes umfasst:
Verarbeiten, durch ein Rechengerät, des Eingabedatensatzes durch das Wahrnehmungssystem (60);
Identifizieren, durch das Rechengerät, einer oder mehrerer Wahrnehmungsschwächen;
Isolieren, durch das Rechengerät, mindestens einer Szene aus dem Eingabedatensatz, die die ein oder mehreren Wahrnehmungsschwächen enthält;
Neukennzeichnen der ein oder mehreren Wahrnehmungsschwächen in der mindestens einen Szene, um mindestens eine neu gekennzeichnete Szene zu erhalten; und
Neutrainieren, durch das Rechengerät, des Wahrnehmungssystems (60) mit der mindestens einen neu gekennzeichneten Szene; wodurch die Kennzeichnungsleistung des ML-Wahrnehmungssystems verbessert wird, und
wobei der Schritt des Verarbeitens des Eingabedatensatzes ferner das Erzeugen, durch das Rechengerät, eines mit Gaußschem Rauschen erweiterten Datensatzes, das Verarbeiten, durch das Rechengerät, des erweiterten Datensatzes über das Wahrnehmungssystem und das Vergleichen, durch das Rechengerät, von Ergebnissen des Eingabedatensatzes mit Ergebnissen des erweiterten Datensatzes umfasst.

2. Computerimplementiertes Verfahren nach Anspruch 1, wobei der Schritt des Identifizierens einer oder mehrerer Wahrnehmungsschwächen durch eine Defekterkennungsmaschine (10) durchgeführt wird.

3. Computerimplementiertes Verfahren nach Anspruch 1, wobei die ein oder mehreren Wahrnehmungsschwächen gekennzeichnete Objekte in Begrenzungsrahmen umfassen.

4. Computerimplementiertes Verfahren nach Anspruch 1, wobei der Schritt des Neukennzeichnens der mindestens einen Szene das Senden der mindestens einen Szene zur Kennzeichnung durch einen Menschen umfasst.

5. Computerimplementiertes Verfahren nach Anspruch 1, wobei der Eingabedatensatz aus einem oder mehreren von Ausgangsdaten (20), erweiterten Daten, Ground-Truth-Daten und simulierten Daten besteht.

6. Computerimplementiertes Verfahren nach Anspruch 1, das ferner das Filtern, durch das Rechengerät (245), der Ergebnisse des Verarbeitungsschritts umfasst, um sich auf bestimmte Wahrnehmungsschwächen von technischem Interesse zu konzentrieren.

7. Computerimplementiertes Verfahren nach Anspruch 1, das ferner das Wiederholen des Verfahrens und das Vergleichen der Wahrnehmungsschwächen mit den Wahrnehmungsschwächen umfasst, die in dem Verarbeitungsschritt identifiziert wurden, der vor dem Neukennzeichnen stattfand, um einen Grad an Verbesserung der Leistung des Wahrnehmungssystems (60) zu bestimmen.

8. Computerimplementiertes Verfahren nach Anspruch 7, das ferner das Wiederholen der Schritte des Verarbeitens, Identifizierens, Isolierens, Neukennzeichnens und Neutrainierens umfasst, bis das Neutrainieren des ML-Wahrnehmungssystems (60) mit den neu gekennzeichneten Szenen die Kennzeichnungsleistung nicht mehr bedeutsam verbessert.

9. Computerimplementiertes Verfahren nach Anspruch 8, das ferner das Überarbeiten des ML-Wahrnehmungssystems (60) umfasst, wenn sich die Kennzeichnungsleistung mit den neu gekennzeichneten Szenen nicht bedeutsam verbessert.

10. Computersystem zum Verbessern der Kennzeichnungsleistung eines ML-(Machine-Learned)-Wahrnehmungssystems (60) zum Erkennen von Objekten aus Sensordaten in einem Eingabedatensatz in einem autonomen Fahrzeug, wobei das Computersystem ausgelegt ist zum Durchführen des Verfahrens nach einem vorherigen Anspruch und Folgendes umfasst:
einen Arbeitsspeicher oder eine andere Datenspeichereinrichtung;
einen oder mehrere Prozessoren; und
ein nicht-transitorisches, computerlesbares Medium, das Befehle speichert.

11. Nicht-transitorisches, computerlesbares Medium, das Befehle umfasst, die bei Ausführung durch einen Computer den Computer zum Ausführen des Verfahrens nach einem der Ansprüche 1 bis 9 veranlassen.

## Revendications

1. Procédé mis en œuvre par ordinateur permettant d'améliorer les performances d'étiquetage d'un système de perception (60) par apprentissage automatique (ML) pour détecter des objets à partir de données de capteur sur un ensemble de données d'entrée (20) dans un véhicule autonome, le procédé comprenant les étapes consistant à :
traiter, par un dispositif informatique, l'ensemble de données d'entrée par l'intermédiaire du système de perception (60) ;
identifier, par le dispositif informatique, une ou plusieurs faiblesses de perception ;
isoler de l'ensemble de données d'entrée, par le dispositif informatique, au moins une scène qui comprend les une ou plusieurs faiblesses de perception ;
réétiqueter les une ou plusieurs faiblesses de perception de l'au moins une scène afin d'obtenir au moins une scène réétiquetée ; et
reformer, par le dispositif informatique, le système de perception (60) à l'aide de l'au moins une scène réétiquetée ; les performances d'étiquetage du système de perception ML étant ainsi améliorées, et
l'étape de traitement de l'ensemble de données d'entrée comprenant en outre les étapes consistant à créer, par le dispositif informatique, un ensemble de données augmenté avec un bruit gaussien, à traiter, par le dispositif informatique, l'ensemble de données augmenté par l'intermédiaire du système de perception, et à comparer, par le dispositif informatique, des résultats de l'ensemble de données d'entrée à des résultats de l'ensemble de données augmenté.

2. Procédé mis en œuvre par ordinateur selon la revendication 1, l'étape d'identification d'une ou plusieurs faiblesses de perception étant réalisée par un moteur de détection de défauts (10).

3. Procédé mis en œuvre par ordinateur selon la revendication 1, les une ou plusieurs faiblesses de perception comprenant des objets étiquetés dans des rectangles de délimitation.

4. Procédé mis en œuvre par ordinateur selon la revendication 1, l'étape de réétiquetage de l'au moins une scène comprenant l'étape consistant à envoyer l'au moins une scène pour qu'elle soit étiquetée par un humain.

5. Procédé mis en œuvre par ordinateur selon la revendication 1, l'ensemble de données d'entrée étant constitué d'un ou plusieurs types de données parmi des données de référence (20), des données augmentées, des données témoins et des données simulées.

6. Procédé mis en œuvre par ordinateur selon la revendication 1, comprenant en outre l'étape consistant à filtrer, par le dispositif informatique (245), les résultats de l'étape de traitement afin de se concentrer sur des faiblesses de perception spécifiques présentant un intérêt technique.

7. Procédé mis en œuvre par ordinateur selon la revendication 1, comprenant en outre les étapes consistant à répéter le procédé et à comparer les faiblesses de perception aux faiblesses de perception identifiées lors de l'étape de traitement qui a précédé le réétiquetage afin de déterminer un degré d'amélioration des performances du système de perception (60).

8. Procédé mis en œuvre par ordinateur selon la revendication 7, comprenant en outre l'étape consistant à répéter les étapes de traitement, d'identification, d'isolation, de réétiquetage et de reformation jusqu'à ce que la reformation du système de perception ML (60) avec les scènes nouvellement étiquetées n'améliore plus de manière significative les performances d'étiquetage.

9. Procédé mis en œuvre par ordinateur selon la revendication 8, comprenant en outre l'étape consistant à reconcevoir techniquement le système de perception ML (60) lorsque les performances d'étiquetage ne s'améliorent pas de manière significative avec les scènes nouvellement étiquetées.

10. Système informatique permettant d'améliorer les performances d'étiquetage d'un système de perception (60) par apprentissage automatique (ML) pour détecter des objets à partir de données de capteur sur un ensemble de données d'entrée dans un véhicule autonome, le système informatique étant conçu pour réaliser le procédé selon l'une quelconque des revendications précédentes, et comprenant :
une mémoire ou un autre moyen de stockage de données ;
un ou plusieurs processeurs ; et
un support non transitoire lisible par ordinateur, qui stocke des instructions.

11. Support non transitoire lisible par ordinateur, comprenant des instructions qui, lorsqu'elles sont exécutées par un ordinateur, amènent l'ordinateur à réaliser le procédé selon l'une quelconque des revendications 1 à 9.
